# EUROPÄISCHE PATENTSCHRIFT

(11) **EP 1 430 690 B1**
(45) Veröffentlichungstag und Bekanntmachung des Hinweises auf die Patenterteilung: **21.06.2006**
(21) Anmeldenummer: 02774365.7
(22) Anmeldetag: 13.09.2002
(51) Int. Cl.: H04L 29/06, H04L 12/40

(54) **VERFAHREN ZUM ZUGRIFF AUF EINE BEFEHLSEINHEIT FÜR EIN DATENNETZ**
METHOD FOR ACCESSING A COMMAND UNIT FOR A DATA NETWORK
PROCEDE POUR ACCEDER A UNE UNITE DE COMMANDE POUR UN RESEAU DE TRANSMISSION DE DONNEES

(30) Priorität: 26.09.2001 DE 10147411; 14.08.2002 DE 10237350
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz-Josef, 91180 Heideck (DE); KLOTZ, Dieter, 90768 Fürth (DE); KRAUSE, Karl-Heinz, 90475 Nürnberg (DE); SCHIMMER, Jürgen, 90473 Nürnberg (DE)
(86) Internationale Anmeldenummer: PCT/DE2002/003444
(87) Internationale Veröffentlichungsnummer: WO 2003/028337

(56) Entgegenhaltungen:
- WO-A-00/52585
- KIEL E ET AL: "EINCHIP-CONTROLLER FUER DAS SERCOS-INTERFACE. \INTEGRIERTE ECHTZEIT-KOMMUNIKATION FUER DIE MSR-TECHNIK" ELEKTRONIK, FRANZIS VERLAG GMBH. MUNCHEN, DE, Bd. 41, Nr. 6, 17. März 1992 (1992-03-17), Seiten 50,55-59, XP000287921 ISSN: 0013-5658

## Beschreibung

Die Erfindung betrifft ein Verfahren zum Zugriff auf eine Befehlseinheit für ein Datennetz, insbesondere ein Realtime Ethernet, ein Computerprogrammprodukt sowie einen Teilnehmer mit einer solchen Befehlseinheit und ein Kommunikationssystem.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt. Unter Kontrolleinheiten werden im folgenden Regler- oder Steuerungseinheiten jeglicher Art verstanden, aber auch beispielsweise Switches und/oder Switch-Controller. Als Datennetze werden beispielsweise Bussysteme wie z.B. Feldbus, Profibus, Ethernet, Industrial Ethernet, FireWire oder auch PC-interne Bussysteme (PCI), etc., insbesondere aber auch isochrones Realtime Ethernet verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation. Gemäss IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Beim Betrieb einer Befehlseinheit für den Zugriff auf ein Datennetz (Command-Interface) an einem Multi-Master-System können mehrere Anwendungen gleichzeitig oder nacheinander, in jedem Fall jedoch unkoordiniert auf die Befehlseinheit zugreifen. Eine Koordinierung der einzelnen Anwendungen auf das Command-Interface ist hierbei nötig, um die Übergabe und Bearbeitung der Befehle am Command-Interface zu gewährleisten. Für die Implementierung der Anwendungen können ein oder mehrere Prozessoren (Master) des Teilnehmers vorgesehen sein.

Die Koordination wurde bisher auf Software-Ebene (Treiber) realisiert, indem für die Dauer der Bearbeitung die Anwendungen durch Interrupt-Sperren blockiert wurden. Auf Hardware-Ebene konnte durch ein Bus-Locking ein weiterer Zugriff auf das Command-Interface verhindert werden. Somit wurde ebenfalls die Software für die Dauer der Bearbeitung angehalten. Nachteil:
- Auch wenn eine Anwendung keinen Zugriff auf das Command-Interface durchführen will, wird aufgrund der Bus-Locking-Mechanismen die Softwarebearbeitung unterbrochen.
- Durch die Interrupt-Sperre kann für die Dauer der Befehlsbearbeitung ein auftretendes Interrupt-Ereignis nicht sofort bearbeitet werden, die Interrupt-Routine wird verspätet ausgeführt. Die längste Interruptsperrzeit bestimmt die Interruptlatenzzeit des Systems.

Der Erfindung liegt daher die Aufgabe zu Grunde ein verbessertes Verfahren zum Zugriff auf eine Befehlseinheit für ein Datennetz zu schaffen. Der Erfindung liegt ferner die Aufgabe zu Grunde ein verbessertes Computerprogramm für den Zugriff einer Anwendung auf eine solche Befehlseinheit zu schaffen sowie einen Teilnehmer für ein Kommunikationssystem.

Die der Erfindung zu Grunde liegenden Aufgaben werden jeweils mit den Merkmalen der entsprechenden unabhängigen Patentansprüche gelöst. Bevorzugte Ausführungsformen der Erfindung sind in den abhängigen Patentansprüchen angegeben.

Erfindungsgemäß erfolgt die Befehlsübergabe an die Befehlseinheit nicht direkt, sondern indirekt, indem lediglich ein Zeiger auf den Adressbereich der Befehlsstruktur in dem Speicher des Teilnehmers in das Eingangs-Register der Befehlseinheit übergeben wird. Von besonderem Vorteil ist dabei, dass die Übergabe des Befehls an die Befehlseinheit als "atomarer" Schreibzugriff auf das Eingangs-Register durchgeführt werden kann, der zum Beispiel nur einen Bustakt benötigt.

Nach einer bevorzugten Ausführungsform der Erfindung dient die Befehlseinheit zur Durchführung bestimmter Grundoperationen über das Datennetz. Die Befehlseinheit wird von den verschiedenen Anwendungen des Teilnehmers über ein gemeinsames Interface genutzt. Dabei werden alle Anwendungen als gleichwertig behandelt. Den Zugriff auf einen internen Datenbus des Teilnehmers für den Zugriff der Anwendungen auf die Befehlseinheit regelt eine Arbitrierungseinheit.

Von besonderem Vorteil ist, dass aufgrund des "atomaren" Schreibzugriffs auf das Eingangs-Register der Befehlseinheit keine Bus-Lock-Mechanismen oder Interrupt-Sperren erforderlich sind. Erfindungsgemäß wird zunächst eine Befehlsstruktur in dem Speicher des Teilnehmers, insbesondere dem Kommunikationsspeicher hinterlegt, bevor diese Befehlsstruktur durch das Schreiben eines Zeigers auf den Adressbereich der Befehlsstruktur in dem Speicher in das Eingangs-Register geschrieben wird. Sowohl der Prozessor als auch die Befehlseinheit können auf den Kommunikationsspeicher zugreifen.

Die Befehlseinheit greift dann auf die Befehlsstruktur zu und arbeitet diese ab. Dies hat im Vergleich zu der direkten Übergabe der Befehlsparameter an die Befehlseinheit den Vorteil, dass Befehlsstrukturen einer beliebigen Länge, zum Beispiel von mehr als 32-Bit bearbeitet werden können. Ferner ist auch die Ausführungsdauer für die Ausführung einer Befehlsstruktur nicht begrenzt und kann unterschiedlich viel Information zurückliefern.

Ein weiterer Vorteil ist, dass Befehle von mehreren Anwendungen abgegeben werden können, die nicht notwendigerweise untereinander koordiniert sein müssen. Ferner können mehrere, auch gleiche Befehle direkt nacheinander in das Eingangs-Register geschrieben werden, ohne die Ausführung jedes einzelnen Befehls abwarten zu müssen.

Nach einer bevorzugten Ausführungsform der Erfindung erfolgt eine Bestätigung von über das Eingangs-Register übernommenen Befehle durch die Befehlseinheit dadurch, dass die Befehlseinheit die Bestätigung in ein Bestätigungs-Feld in der Befehlsstruktur in dem Speicher des Teilnehmers einträgt.

Nach einer weiteren bevorzugten Ausführungsform der Erfindung werden keinerlei Anforderungen an den Datenbus bezüglich Locken bzw. Blockierung gestellt, das heißt der Bus wird nie über eine einzelne Lese- oder Schreiboperation hinaus gelockt. Ferner ist die zwischen den Anwendungen und der Befehlseinheit übertragene Informationsmenge nicht nach oben hin begrenzt. Eine Koordinierung wie zum Beispiel Interrupt-Sperren zwischen den aufrufenden Anwendungen ist nicht notwendig.

Nach einer weiteren bevorzugten Ausführungsform der Erfindung werden alle von den Anwendungen abgesetzten Befehle in einem Schreibzyklus dem Eingangs-Register (Command-Interface) übergeben, um Bus-Lock-Zeiten zu vermeiden. Dem Command-Interface wird lediglich ein Zeiger (Adresse) auf einen Speicherbereich übergeben, in dem sich die von der Anwendung zuvor in dem Speicher abgelegte Befehlsstruktur befindet. Dadurch werden mehrfache Schreib-Zugriffe auf das Command-Interface vermieden, die sonst bei Befehlen mit mehreren Operanden erforderlich sind.

Aus dem Adressbereich in dem Speicher werden dann die Befehlsdaten aus einer definierten Befehlsstruktur vom Command-Interface ausgelesen, interpretiert und der entsprechenden Ausführungseinheit zur Bearbeitung übergeben.

Die aktiven Busteilnehmer des Datenbusses, das heißt die aktiven Anwendungen, können unabhängig voneinander Schreibzugriffe auf das Command-Interface durchführen. Dadurch wird auch Multi-Tasking durch nicht geordnete (gemischte) Zugriffe der verschiedenen Anwendungen auf das Command-Interface unterstützt. Um die einzelnen Tasks einer Anwendung nicht durch Interrupt-Sperren gegenseitig zu verriegeln, sind im Command-Interface vorzugsweise Mechanismen implementiert, die einen wahlfreien Zugriff aller Anwendungen in verschiedenster Reihenfolge und zu unterschiedlichen Zeiten auf das Interface zulassen.

Vorzugsweise können die Anwendungen erkennen, ob ihre Zeiger auf eine Befehlsstruktur, die in das Command-Interface geschrieben wurde, übernommen worden sind. Sind gelesene und geschriebene Adresse identisch, so wurde das Kommando am Command-Interface akzeptiert. Sind sie ungleich, so können hierfür zwei Möglichkeiten verantwortlich sein:
- Das Kommando wurde nicht akzeptiert, weil die Übernahme eines früheren Kommandos noch nicht abgeschlossen war.
- Das Kommando wurde bereits übernommen, aber zwischen dem Schreiben und Lesen wurde bereits ein weiteres Kommando übernommen. Diese Situation kann sich sowohl mit einer Anwendung (Kernel mit preemptiven Multitasking, wenn dies nicht vom Betriebssystem verwaltet wird) als auch bei Systemen mit mehreren physikalischen Teilnehmern ergeben. Daher werden von der Hardware vorzugsweise zwei Mechanismen unterstützt, die beide von der Software zur eindeutigen Erkennung genutzt werden müssen:
   - Rücklesen der gerade geschriebenen Daten (Adresse auf Befehlsstruktur) aus dem Command-Interface. Dabei wird erkannt, ob die Daten einer Anwendung am Command-Interface übernommen worden sind. Ist dies der Fall, so wird der Befehl über das Command-Interface ausgeführt; wenn nicht, dann wurden bereits vorab die Daten einer zweiten Anwendung ins Interface eingetragen und noch nicht von der Hardware in die Command-Liste umgekettet, so dass ein Command der ersten Anwendung nicht angenommen werden konnte.
   - Bestätigung der übernommenen Daten. Werden zwischen Beschreiben und Rücklesen der Adresse folgende Aktionen am Command-Interface ausgeführt, wie z. B.
- Übernahme des Befehls durch das Command-Interface,
- Bestätigen der Übernahme durch ein "Acknowledge"-Feld in der Befehlsstruktur durch das Command-Interface,
- Beschreiben des Command-Interfaces mit neuen Adressdaten durch einen zweiten Teilnehmer,
so stimmen geschriebene und rückgelesene Daten nicht mehr überein. Die Übernahme eines Befehls kann jetzt lediglich am " Acknowledge" -Feld der Befehlsstruktur eindeutig erkannt werden.

Um ein critical race auszuschließen, wird vorzugsweise erst das "Acknowledge" -Feld gesetzt, bevor das Command-Interface wieder beschreibbar wird. Die Übernahme eines Kommandos ist in der Regel mit der Einkettung der Befehlsstruktur in eine Command-Liste abgeschlossen, sie erfolgt also schnell. Eine Optimierung auf eine möglichst kurze und garantierte Übernahmezeit hat Priorität, um bei einem erneuten Schreibzugriff auf das Command-Interface keine unnötigen Wartezeiten in der Abarbeitung der Software zu erhalten.

Nach einer weiteren bevorzugten Ausführungsform der Erfindung wird ein Befehl bzw. Befehlsfolgen der Anwendungen über ein gemeinsam genutztes Eingangs-Register (Command-Register) der Befehlseinheit übergeben.

Dabei wird im Command-Register die Adresse (Zeiger) auf eine Befehlsstruktur abgelegt. Die Struktur selbst enthält alle für die Abarbeitung des Befehls notwendigen Daten. Um bei langer Befehlsbearbeitung das Command-Register nicht für die gesamte Befehlsbearbeitungs-Dauer zu blockieren, wird die übergebene Befehlsstruktur in einer Command-Liste eingekettet. Die Befehlsstruktur enthält dafür einen "next"-Zeiger, mit deren Hilfe noch nicht bearbeitete Strukturen verkettet werden können. Der "next"-Zeiger enthält die Adresse der nächsten noch nicht bearbeiteten Befehlsstruktur. Über diese Verkettung wird eine Zwischenspeicherung der Befehlsstrukturen in der Command-Liste erreicht. Dadurch wird eine Entkopplung zwischen Befehlsbearbeitung und Befehlsübergabe erreicht.

Erfolgt ein Schreibzugriff von einem der Teilnehmer auf das Register, wird die Übernahme weiterer Daten am Command-Register solange verhindert, bis der übergebene Befehl in der Command-Liste eingekettet ist. Erst nachdem das Command-Interface die Übernahme des Befehls durch Setzen des entsprechenden "Acknowledge"-Feldes bestätigt hat, wird ein neuer Schreibzugriff auf das Command-Register akzeptiert.

Nachdem die über das Command-Register übergebenen Befehle abgearbeitet worden sind, werden die zugehörigen Befehlsstrukturen dem Anwender zurückgegeben. Dabei ist für jede Anwendung ein getrenntes Return-Register, im folgenden auch Ausgangs-Register genannt, vorhanden, über das die Befehlsstrukturen übergegeben werden. Um keine schritthaltende Abholung der Befehlsstrukturen am Return-Register durch die Teilnehmer gewährleisten zu müssen, werden die bearbeiteten Strukturen in getrennte, teilnehmerabhängige Return-Listen eingekettet. Die Rückgabe jeder bearbeiteten Struktur, wird dem jeweiligen Teilnehmer bekanntgemacht. Die verketteten Befehlsstrukturen werden dabei über das Return-Register zurückgegeben.

Nach einer bevorzugten Ausführungsform der Erfindung übergibt eine Anwendung eine Befehlsstruktur durch einen Schreibzugriff auf das Command-Register an das Command-Interface.

Als Folge des Schreibvorgangs auf das Command-Registers werden solange keine Daten nachfolgender Schreibzugriffe akzeptiert, bis die übergebene Struktur vom Command-Interface in die gemeinsame Command-Liste eingekettet und im "Acknowledge"-Feld der Struktur die Übernahme bestätigt wurde. Lesezugriffe auf das Command-Register sind jedoch weiterhin erlaubt. Um zu kontrollieren, ob der gerade eingeschriebene Wert auch ins Command-Register eingetragen worden ist, werden die Daten des Registers wieder zurückgelesen. Stimmen Schreib- und Lesedaten überein, so wurde der Schreibzyklus auf das Command-Register ausgeführt.

Bestehen zwischen den geschriebenen und gelesenen Daten jedoch Unterschiede, so können hierfür zwei Gründe verantwortlich sein:
- Im Zeitraum zwischen dem Schreib- und Lesezyklus einer Anwendung 1, wurde die ins Command-Register eingetragene Befehlsstruktur bereits in die Command-Liste übernommen und die Bestätigung im "Acknowledge" -Feld der Struktur gesetzt. Das Einschreiben neuer Daten in das Command-Register wurde daraufhin freigegeben. Noch bevor die Anwendung 1 ihren Lesezyklus durchführt, konnte die Anwendung 2 einen Schreibzugriff auf das Command-Register absetzen.
- Vor dem Beschreiben des Command-Registers durch eine Anwendung 1 wurde bereits von der Anwendung 2 ein Schreibzugriff abgesetzt. Der Eintrag der nachfolgenden Adressdaten der Anwendung 1 wird dadurch verhindert.

Treten Unterschiede zwischen den Schreib- und Lesedaten auf, so muss die Anwendung vorzugsweise das "Acknowledge"-Feld der Befehlsstruktur analysieren. Ist die Bestätigung im "Acknowledge"-Feld der Struktur gesetzt, so wurde die Befehlsstruktur übernommen und in die Command-Liste eingekettet. Die nicht bestätigte Übernahme der Struktur führt zu einem zyklischen Schreibzugriff auf das Command-Register (Polling).

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen eingesetzt bzw. verwendet werden können.

Von weiterem Vorteil ist, dass die Erfindung sowohl für Kommunikationsanwendungen als auch für andere Anwendungen, wie z.B. Command-Interfaces anderer intelligenter Subsysteme, insbesondere Graphiksysteme, einsetzbar ist.

Im Weiteren werden bevorzugte Ausführungsformen der Erfindung mit Bezugnahme auf die Zeichnungen näher erläutert. Es zeigen:
- Figur 1: ein Blockdiagramm einer Ausführungsform eines erfindungsgemäßen Teilnehmers eines Datennetzes,
- Figur 2: eine Prinzipdarstellung des Command-Interfaces,
- Figur 3: ein Beispiel für verkettete Befehls-Strukturen in dem Speicher des Teilnehmers,

- Figur 4: ein Flussdiagramm einer Ausführungsform des erfindungsgemäßen Verfahrens.

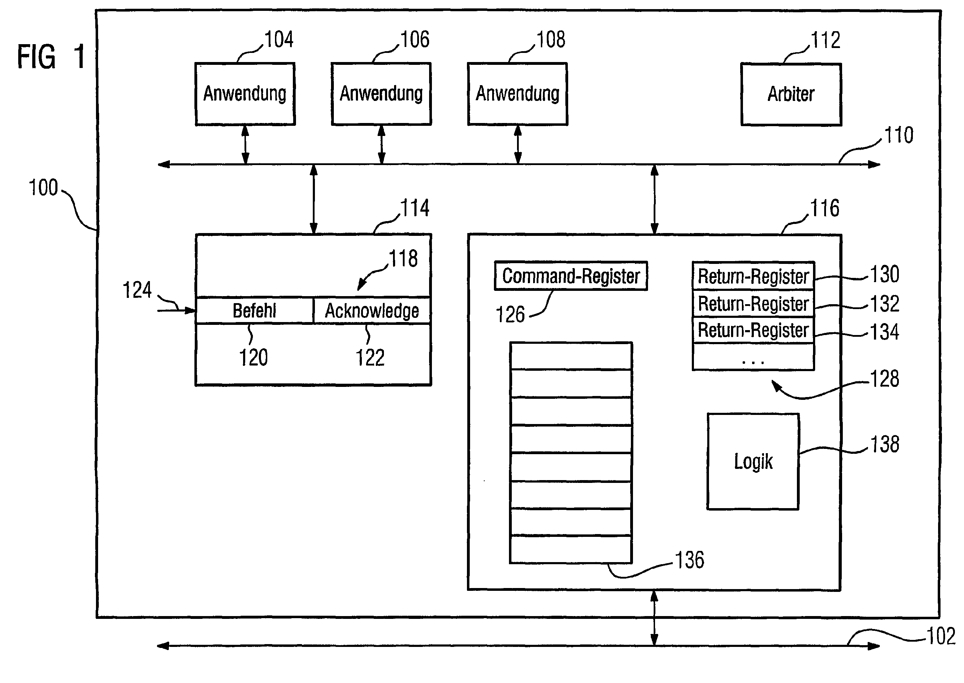

Die Figur 1 zeigt einen Teilnehmer 100 eines Datennetzes 102. Bei dem Datennetz 102 kann es sich zum Beispiel um ein Realtime Ethernet für Anwendungen in der Automatisierungstechnik handeln. An ein solches Datennetz 102 werden typischerweise mehrere Teilnehmer angeschlossen, die prinzipiell gleich wie der Teilnehmer 100 aufgebaut sind. Dadurch wird ein Kommunikationssystem geschaffen.

Der Teilnehmer 100 hat mehrere Anwendungen 104, 106, 108, ..., die auf einen Datenbus 110 des Teilnehmers 100 zugreifen können. Der Zugriff der einzelnen Anwendungen 104, 106, 108, ... auf den Datenbus 110 wird durch einen Arbiter 112 geregelt.

Ferner hat der Teilnehmer 100 einen Speicher 114 und eine Befehlseinheit 116. Der Speicher 114 und die Befehlseinheit 116 sind ebenfalls an den Datenbus 110 gekoppelt.

Jede der Anwendungen 104, 106, 108 kann über den Datenbus 110 den Speicher 114 mit einer Befehlsstruktur 118 beschreiben. In der Ausführungsform der Figur 1 besteht die Befehlsstruktur 118 aus einem, von der Befehlseinheit 116 ausführbaren Befehl 120 und einem Bestätigungs-Feld 122. Die Befehlsstruktur 118 wird in einem Adressbereich des Speichers 114 gespeichert, auf den der Zeiger 124 zeigt.

Die Befehlseinheit 116 ist sowohl mit dem Datenbus 110 als auch mit dem Datennetz 102 gekoppelt. Die Befehlseinheit 116 dient zur Ausführung verschiedener Grundoperationen, die das Datennetz 102 bezüglich der Anwendungen 104, 106, 108, ... betreffen. Die Befehlseinheit 116 beinhaltet ein Interface für die Anwendungen 104, 106, 108, ... welches ein Command-Register 126 und mehrere Return-Register 128 aufweist.

Das Command-Register 126 dient als Eingangs-Register zur Abspeicherung von Zeigern 124. Auf das Command-Register 126 kann jede der Anwendungen 104, 106, 108, ... über den Datenbus 110 zugreifen. Dagegen ist jedes der Return-Register 128 einer bestimmten Anwendung zugeordnet. Zum Beispiel ist das Return-Register 130 der Anwendung 104, das Return-Register 132 der Anwendung 106 und das Return-Register 134 der Anwendung 108 zugeordnet, etc.

Die Befehlseinheit 116 beinhaltet ferner eine Command-Liste 136, die auch als sogenannter Stack bezeichnet wird. In der Command-Liste 136 befinden sich die von der Befehlseinheit 116 akzeptierten und abzuarbeitenden Befehle.

Ferner hat die Befehlseinheit 116 eine Logik-Schaltung 138 zur Bearbeitung der Befehle.

Im Betrieb greift eine der Anwendungen des Teilnehmers 100, zum Beispiel die Anwendung 104 über den Datenbus 110 auf den Speicher 114 zu, um dort eine Befehlsstruktur 118 abzulegen. Danach greift die Anwendung 104 über den Datenbus 110 auf das Command-Register 126 mit einem Schreib-Zugriff zu, um den Zeiger 124 auf die Befehlsstruktur 118 in das Command-Register 126 zu schreiben. Die Befehlseinheit 116 übernimmt dann die Befehlsstruktur 118 aus dem Speicher 114 in die Command-Liste 136 und bestätigt die Übernahme durch einen entsprechenden Eintrag in dem Bestätigungs-Feld 122 der Befehlsstruktur 118.

Nach der Bearbeitung der Befehlsstruktur 118 schreibt die Befehlseinheit 116 den Zeiger 124 in das Return-Register 130, welches der Anwendung 104 zugeordnet ist. Die Anwendung 104 kann das Return-Register 130 durch einen Lese-Zugriff über den Datenbus 110 abfragen, um zu prüfen, ob die Befehlsstruktur 118 bereits abgearbeitet worden ist.

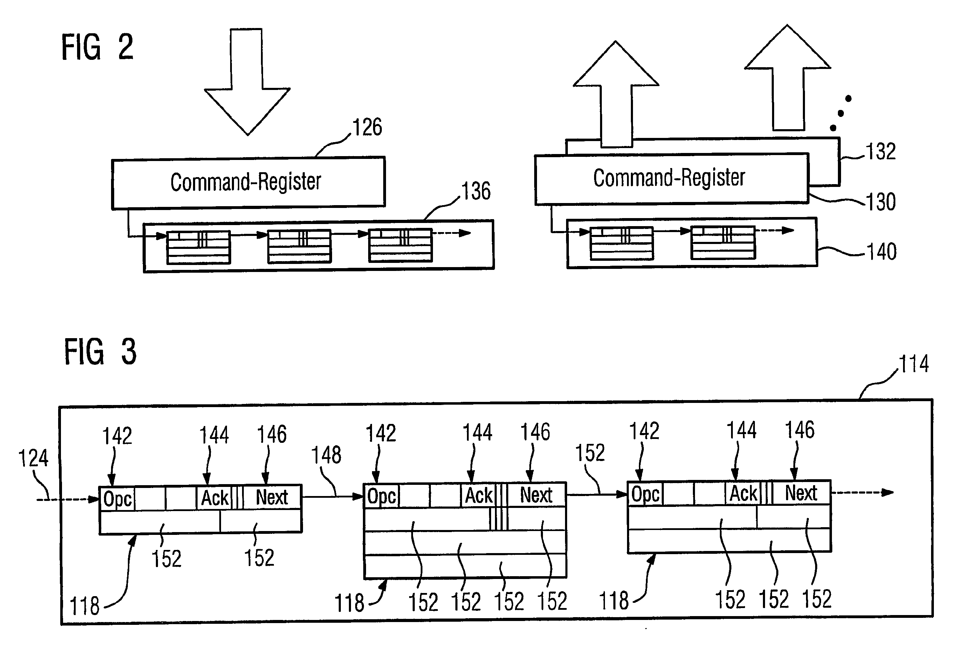

Die Figur 2 zeigt eine Weiterbildung des Command-Interfaces der Figur 1.

Das Command-Register 126 kann dabei von den verschiedenen Anwendungen 104, 106, 108, ... unkoordiniert beschrieben werden. Aus den übernommenen Befehlsstrukturen 118 resultiert die Command-Liste 136.

Ferner ist jedem der Return-Register 130, 132, 134, ... eine Return-Liste 140, ... zugeordnet, wobei die Return-Liste 140 dem Return-Register 130 zugeordnet ist, welches wiederum der Anwendung 104 zugeordnet ist. Mit Hilfe der Return-Liste 140 lässt sich die Ausgabe von Zeigern 124 puffern.

Die Figur 3 zeigt ein Ausführungsbeispiel für eine verkettete Befehlsstruktur in dem Speicher 114. In diesem Ausführungsbeispiel hat die Befehlsstruktur 118 ein Feld 142 für die Speicherung von ein oder mehreren Befehlen 120 (vgl. Fig. 1), ein Feld 144 zur Speicherung einer Bestätigung, welches dem Bestätigungs-Feld 122 der Figur 1 entspricht, sowie ein Feld 146 zur Speicherung eines Zeigers 148 auf eine weitere Befehlsstruktur 118, die prinzipiell gleich aufgebaut ist. Die weitere Befehlsstruktur 118 hat einen Zeiger 150 auf eine weitere Befehlsstruktur 118 etc. Die letzte Befehlsstruktur 118 der Kette hat keinen weiteren Zeiger, womit das letzte Glied der verketteten Befehlsstruktur gekennzeichnet ist.

Die Befehlsstrukturen 118 haben ferner Felder 152 zur Speicherung von Parametern, Nutzdaten oder Operanden für die Ausführung des betreffenden Befehls 120.

Wird der Zeiger 124 in dieser Ausführungsform an das Command-Register 126 übergeben (vgl. Figur 1) und wird die Übergabe von der Befehlseinheit 116 bestätigt, so wird die gesamte Kette von Befehlsstrukturen 118 von der Befehlseinheit 116 daraufhin abgearbeitet. Mit einem einzigen "atomaren" Schreibzugriff auf das Command-Register 126 zum Beispiel innerhalb eines Bustaktes, kann also die Abarbeitung einer komplexen Abfolge von Befehlen durch die Befehlseinheit 116 von einer Anwendung angestoßen werden.

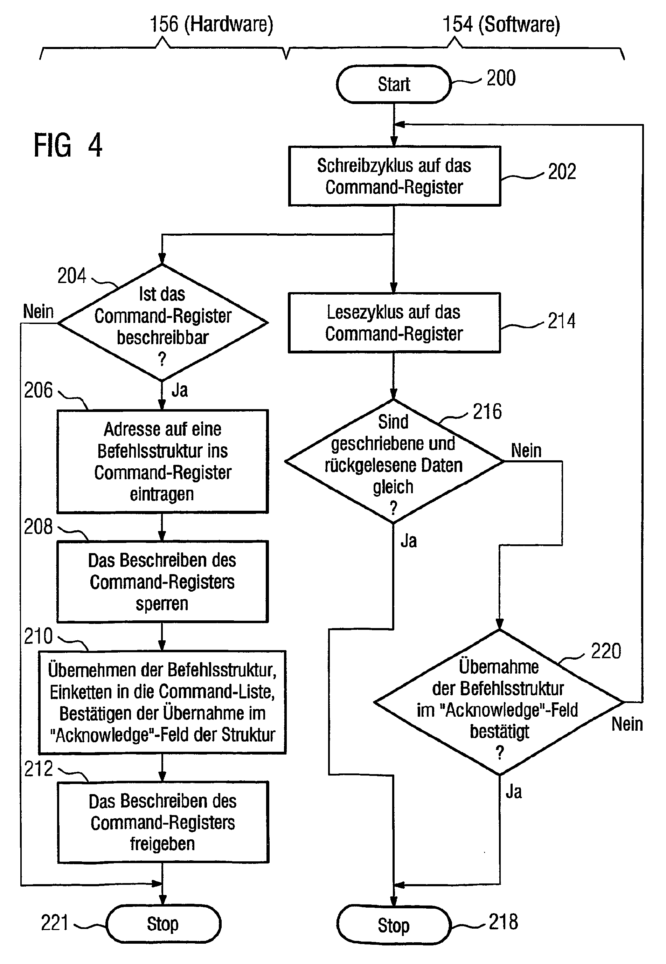

Die Figur 4 zeigt ein Flussdiagramm eines Verfahrens zum Betrieb des Systems der Figur 1. Das Verfahren untergliedert sich in einen Software-Prozess 154 und einen Hardware-Prozess 156. Nach dem Start des Software-Prozesses 154 in dem Schritt 200 führt die Anwendung, zu der der Software-Prozess 154 gehört, zum Beispiel die Anwendung 104 der Figur 1, einen Schreib-Zugriff auf das Command-Register in einem Buszyklus aus. Dies erfolgt in dem Schritt 202. In dem Schreibzyklus übergibt die Anwendung 104 den Zeiger 124 auf eine Befehlsstruktur 118 bzw. eine Verkettung von Befehlsstrukturen 118. Dadurch wird der Hardware-Prozess 156 gestartet.

In dem Schritt 204 des Hardware-Prozesses 156 wird geprüft, ob das Command-Register beschreibbar ist. Ist dies nicht der Fall, endet der Ablauf in dem Schritt 206. In diesem Fall muss die Anwendung den Software-Prozess 154 mit dem Schritt 200 erneut beginnen.

Wenn das Command-Register jedoch beschreibbar ist, so wird der von der Anwendung 104 übergebene Zeiger 124 in das Command-Register eingetragen, was in dem Schritt 206 erfolgt. Danach wird das Beschreiben des Command-Registers in dem Schritt 208 gesperrt, so dass andere Anwendungen den in dem Register befindlichen Zeiger nicht überschreiben können.

In dem Schritt 210 wird die Befehlsstruktur bzw. die verkettete Befehlsstruktur übernommen, das heißt es erfolgt ein Einketten der abzuarbeitenden Befehle in die Command-Liste und eine Bestätigung der Übernahme im Bestätigungs-Feld der Befehlsstruktur.

Danach wird das Beschreiben des Command-Registers in dem Schritt 212 wieder freigegeben und der Ablauf des Hardware-Prozesses 156 endet mit dem Schritt 206.

Nach dem Schreibzyklus in dem Schritt 202 wird in dem Software-Prozess 154 ein Lesezyklus in dem Schritt 214 auf das Command-Register in dem Schritt 214 durchgeführt. In dem Schritt 216 wird geprüft, ob die zuvor in dem Schritt 202 in das Command-Register geschriebenen Daten, das heißt der Zeiger 124, noch in dem Command-Register stehen.

Ist dies der Fall, so bedeutet dies, dass eine Übernahme der Befehlsstruktur in dem Schritt 210 erfolgt ist, so dass der Software-Prozess mit dem Schritt 218 endet. Ist das Gegenteil der Fall, so kann dies bedeuten, dass eine Übernahme erfolgt ist und bereits eine andere Anwendung das Command-Register mit einem anderen Zeiger beschrieben hat, oder dass eine Übernahme seitens des Hardware-Prozesses 156 nicht erfolgt ist. In diesem Fall wird in dem Schritt 220 das Bestätigungs-Feld in der Befehlsstruktur überprüft. Wenn dort eine Bestätigung eingetragen worden ist, so kann der Software-Prozess 154 wiederum mit dem Schritt 218 beendet werden. Ist dies nicht der Fall, so muss die Ablaufsteuerung zurück zu dem Schritt 202 gehen.

## Patentansprüche

1. Verfahren zum Zugriff auf eine Befehlseinheit (116) für ein Datennetz (102) mit folgenden Schritten:
- Betrieb mehrerer Anwendungen (104, 106, 108,...) in einem Teilnehmer (100) des Datennetzes (102), wobei die Anwendungen auf einen Datenbus (110) des Teilnehmers (100) zugreifen,
- Schreiben zumindest einer Befehlsstruktur (118) in einen Adressbereich eines Speichers des Teilnehmers (100) durch eine erste der Anwendungen über den Datenbus (110),
**gekennzeichnet durch** die weiteren Schritte:
- Schreiben eines Zeigers (124) auf den Adressbereich in ein Eingangs-Register (126) der Befehlseinheit (116) **durch** die erste Anwendung über den Datenbus (110),
- Zugriff der Befehlseinheit (116) auf den Adressbereich über den Datenbus (110) und Bearbeitung der Befehlsstruktur (118),
- Schreiben des Zeigers (124) in ein der ersten Anwendung zugeordnetes Ausgaberegister (136, 130) nach der Bearbeitung der Befehlsstruktur (118) **durch** den Teilnehmer (100).

2. Verfahren nach Anspruch 1, wobei der Zugriff auf den Datenbus (110) durch eine Arbitrierungseinheit (112) geregelt wird, wobei ein Zugriff für eine vorgegebene Anzahl von Bustakten erlaubt wird und die vorgegebene Anzahl von Bustakten für das Schreiben des Zeigers (124) in das Eingangs-Register (126) ausreichend ist.

3. Verfahren nach Anspruch 1 oder 2, wobei die Befehlsstruktur (118) ein Bestätigungs-Feld (122) beinhaltet, mit folgenden weiteren Schritten:
- Sperren des Eingangs-Registers (126) nach dem Schreiben des Zeigers (124) durch den Teilnehmer (100),
- Schreiben einer Bestätigung in das Bestätigungs-Feld (122) durch den Teilnehmer (100),
- Freigabe des Eingangs-Registers (126) durch den Teilnehmer (100) nach der Bestätigung.

4. Verfahren nach einem der vorhergehenden Ansprüche 1 bis 3, mit folgenden weiteren Schritten:
- Lesen des Eingangs-Registers (126) durch die erste Anwendung nach dem Schreiben des Zeigers (124),
- Prüfung durch die erste Anwendung, ob das Eingangs-Register (126) den Zeiger (124) beinhaltet,
- Falls dies nicht der Fall ist: Prüfung, ob eine Bestätigung in dem Bestätigungs-Feld (122) gespeichert worden ist.

5. Verfahren nach einem der vorhergehenden Ansprüche 1 bis 4, wobei die Befehlsstruktur (118) ausführbare Befehle und Nutzdaten beinhaltet.

6. Verfahren nach einem der vorhergehenden Ansprüche 1 bis 5, wobei durch die erste Anwendung mehrere miteinander verkettete Befehlsstrukturen in den Speicher geschrieben werden und der Zeiger (124) auf den Adressbereich der ersten Befehlsstruktur (118) der Kette zeigt.

7. Computerprogrammprodukt für eine Anwendung (104, 106, 108,...) eines Teilnehmers (100) eines Datennetzes (102), wobei die Anwendung auf einen Datenbus (110) für mehrere Anwendungen des Teilnehmers (100) zugreifen kann, und der Teilnehmer (100) ein Eingangs-Register (126) und ein der Anwendung zugeordnetes Ausgabe-Register (136, 130) aufweist, mit Programmmitteln zur Durchführung der folgenden Schritte:
- Schreiben einer Befehlsstruktur (118) in einen Adressbereich eines Speichers des Teilnehmers (100) über den Datenbus (110),
**gekennzeichnet durch** die weiteren Schritte:
- Schreiben eines Zeigers (124) auf den Adressbereich in das Eingangs-Register (126) einer Befehlseinheit (116) über den Datenbus (110),
- Lesen des Eingangs-Registers (126), um zu überprüfen, dass die Befehlsstruktur (118) **durch** die Befehlseinheit (116) bestätigt worden ist.

8. Computerprogrammprodukt nach Anspruch 7, wobei eine Überprüfung eines Bestätigungs-Felds (122) in der Befehlsstruktur (118) erfolgt, wenn bei dem Lesen des Eingangs-Registers (126) der Zeiger (124) nicht mehr in dem Eingangs-Register (126) steht.

9. Computerprogrammprodukt nach Anspruch 7 oder 8, wobei mehrere miteinander verkettete Befehlsstrukturen in den Speicher des Teilnehmers (100) geschrieben werden, und der Zeiger (124) auf den Adressbereich der ersten Befehlsstruktur (118) der Kette zeigt.

10. Computerprogrammprodukt nach Anspruch 7, 8 oder 9, wobei das der Anwendung zugeordnete Ausgabe-Register (136, 130) gelesen wird, um zu überprüfen, ob die Befehlsstruktur (118) von der Befehlseinheit (116) bearbeitet worden ist.

11. Teilnehmergerät (100) eines Datennetzes (102) mit
- einer Befehlseinheit (116) zum Zugriff auf das Datennetz (102),
- Mitteln zum Betrieb mehrerer Anwendungen (104, 106, 108,...), wobei die Anwendungen auf einen Datenbus (110) des Teilnehmers (100) zugreifen können und
- Mitteln zum Schreiben zumindest einer Befehlsstruktur (118) in einen Adressbereich eines Speichers des Teilnehmers (100) durch eine erste der Anwendungen über den Datenbus (110),
**gekennzeichnet durch**
- Mittel zum Schreiben eines Zeigers (124) auf den Adressbereich in ein Eingangs-Register (126) der Befehlseinheit (116) **durch** die erste Anwendung über den Datenbus (110),
- Mittel zum Zugriff der Befehlseinheit (116) auf den Adressbereich über den Datenbus (110) und Bearbeitung der Befehlsstruktur (118) und
- Mittel zum Schreiben des Zeigers (124) in ein der ersten Anwendung zugeordnetes Ausgaberegister (136, 130) nach der Bearbeitung der Befehlsstruktur (118) durch den Teilnehmer (100).

12. Teilnehmergerät (100) nach Anspruch 11 mit einer Arbitrierungseinheit (112) zur Regelung des Zugriffs auf den Datenbus (110), wobei ein Zugriff für eine vorgebene Anzahl von Bustakten erlaubt wird und die vorgegebene Anzahl von Bustakten für das Schreiben des Zeigers (124) in das Eingangs-Register (126) ausreichend ist.

13. Teilnehmergerät (100) nach Anspruch 11 oder 12, bei dem ein Bestätigungs-Feld (122) in der Befehlsstruktur (118) beinhaltet ist und mit
- Mitteln zum Sperren des Eingangs-Registers (126) nach dem Schreiben des Zeigers (124) durch den Teilnehmer (100),
- Mitteln zum Schreiben einer Bestätigung in das Bestätigungs-Feld (122) durch den Teilnehmer (100),
- Mittel zur Freigabe des Eingangs-Registers (126) durch den Teilnehmer (100) nach der Bestätigung.

14. Teilnehmergerät (100) nach Anspruch 11, 12 oder 13 mit
- Mitteln zum Lesen des Eingangs-Registers (126) durch die erste Anwendung nach dem Schreiben des Zeigers (124),
- Mitteln zur Prüfung durch die erste Anwendung, ob das Eingangs-Register (126) den Zeiger (124) beinhaltet, und, falls dies nicht der Fall ist, zur Prüfung, ob eine Bestätigung in dem Bestätigungs-Feld (122) gespeichert worden ist.

15. Teilnehmergerät (100) nach einem der vorhergehenden Ansprüche 11 bis 14, wobei die Befehlsstruktur (118) ausführbare Befehle und Nutzdaten beinhaltet.

16. Teilnehmergerät (100) nach einem der vorhergehenden Ansprüche 11 bis 15, mit mehreren miteinander verketteten Befehlsstrukturen in dem Speicher, wobei der Zeiger (124) auf den Adressbereich der ersten Befehlsstruktur (118) der Kette zeigt.

17. Kommunikationssystem mit einem Datennetz (102) und mehreren Teilnehmergeräten nach einem der vorhergehenden Patentansprüche 11 bis 16.

## Claims

1. Method for accessing a command unit (116) for a data network (102) comprising the following steps:
- Operation of a plurality of applications (104, 106, 108...) in a user device (100) of the data network (102), the applications accessing a data bus (110) of the user device (100),
- Writing of at least one command structure (118) to an address space of a memory of the user device (100) by a first application of the applications via the data bus (110),
**characterized by** the additional steps:
- Writing of a pointer (124) pointing to the address space to an input register (126) of the command unit (116) by the first application via the data bus (110),
- Access by the command unit (116) to the address space via the data bus (110) and processing of the command structure (118),
- Writing of the pointer (124) into an output register (136, 130) assigned to the first application after the processing of the command structure (118) by the user device (100).

2. Method according to Claim 1, wherein the access to the data bus (110) is controlled by an arbitration unit (112), wherein an access is allowed for a defined number of bus clock cycles, and the defined number of bus clock cycles is sufficient for the writing of the pointer (124) into the input register (126).

3. Method according to Claim 1 or 2, wherein the command structure (118) contains an acknowledgement field (122), comprising the following additional steps:
- Disabling of the input register (126) after the writing of the pointer (124) by the user device (100),
- Writing of an acknowledgement in the acknowledgement field (122) by the user device (100),
- Enabling of the input register (126) by the user device (100) after the acknowledgement.

4. Method according to one of the preceding claims 1 to 3, comprising the following additional steps:
- Reading of the input register (126) by the first application after the writing of the pointer (124).
- Checking by the first application whether the input register (126) contains the pointer (124),
- If this is not the case: checking whether an acknowledgement has been saved in the acknowledgement field (122).

5. Method according to one of the preceding claims 1 to 4, wherein the command structure (118) contains executable commands and user data.

6. Method according to one of the preceding claims 1 to 5, wherein a plurality of command structures linked to each other are written to the memory by the first application, and the pointer (124) points to the address space of the first command structure (118) of the chain.

7. Computer program product for an application (104, 106, 108,...) of a user device (100) of a data network (102), wherein the application can access a data bus (110) for a plurality of applications of the user device (100), and the user device (100) comprises an input register (126) and an output register (136, 130) assigned to the application, having program means for performing the following steps:
- Writing of a command structure (118) to an address space of a memory of the user device (100) via the data bus (110),
**characterized by** the additional steps:
- Writing of a pointer (124) pointing to the address space to the input register (126) of a command unit (116) via the data bus (110),
- Reading of the input register (126) in order to check that the command structure (118) has been acknowledged by the command unit (116).

8. Computer program product according to Claim 7, wherein an acknowledgement field (122) in the command structure is checked when on reading the input register (126) the pointer (124) is no longer held in the input register (126).

9. Computer program product according to Claim 7 or 8, wherein a plurality of command structures linked to each other are written to the memory of the user device (100), and the pointer (124) points to the address space of the first command structure (118) of the chain.

10. Computer program product according to Claim 7, 8 or 9, wherein the output register (136, 130) assigned to the application is read in order to check whether the command structure (118) has been processed by the command unit (116).

11. User device (100) of a data network (102) comprising
- A command unit (116) for accessing the data network (102),
- Means for operating a plurality of applications (104, 106, 108...), wherein the applications can access a data bus (110) of the user device (100), and
- Means to write at least one command structure (118) to an address space of a memory of the user device (100) by a first application of the applications via the data bus (110),
**characterized by**
- Means for the writing of a pointer (124) pointing to the address space to an input register (126) of the command unit (116) by the first application via the data bus (110),
- Means for the access by the command unit (116) to the address space via the data bus (110) and processing of the command structure (118), and
- Means for the writing of the pointer (124) into an output register (136, 130) assigned to the first application after the processing of the command structure (118) by the user device (100).

12. User device (100) according to Claim 11 having an arbitration unit (112) for controlling the access to the data bus (110), wherein an access is allowed for a defined number of bus clock cycles, and the defined number of bus clock cycles is sufficient for the writing of the pointer (124) into the input register (126).

13. User device (100) according to Claim 11 or 12, in which an acknowledgement field (122) is contained in the command structure (118), and comprising
- Means for the disabling of an input register (126) after the writing of the pointer (124) by the user device (100),
- Means for the writing of an acknowledgement in the acknowledgement field (122) by the user device (100),
- Means for the enabling of the input register (126) by the user device (100) after the acknowledgement.

14. User device (100) according to Claim 11, 12 or 13, comprising
- Means for the reading of the input register (126) by the first application after the writing of the pointer (124),
- Means for checking by the first application whether the imput register (126) contains the pointer (124), and if this is not the case, for checking whether an acknowledgement has been saved in the acknowledgement field (122).

15. User device (100) according to one of the preceding claims 11 to 14, wherein the command structure (118) contains executable commands and user data.

16. User device (100) according to one of the preceding claims 11 to 15, having a plurality of command structures linked to each other in the memory, wherein the pointer (124) points to the address space of the first command structure (118) of the chain.

17. Communications system having a data network (102) and a plurality of user devices according to one of the preceding claims 11 to 16.

## Revendications

1. Procédé pour accéder à une unité de commande (116) pour un réseau de données (102), avec les étapes suivantes :
- fonctionnement de plusieurs applications (104, 106, 108, ...) dans un utilisateur (100) du réseau de données (102), les applications accédant à un bus de données (110) de l'utilisateur (100),
- écriture d'au moins une structure de commande (118) dans une zone d'adresse d'une mémoire de l'utilisateur (100) par une première application par l'intermédiaire du bus de données (110),
**caractérisé par** les autres étapes :
- écriture d'un pointeur (124) sur la zone d'adresse dans le registre d'entrée (126) de l'unité de commande (116) par la première application par l'intermédiaire du bus de données (110),
- accès de l'unité de commande (116) à la zone d'adresse par l'intermédiaire du bus de données (110) et traitement de la structure de commande (118),
- écriture du pointeur (124) dans un registre de sortie (136, 130) associé à la première application après le traitement de la structure de commande (118) par l'utilisateur (100).

2. Procédé selon la revendication 1, dans lequel l'accès au bus de données (110) est régulé par une unité d'arbitrage (112), dans lequel un accès est permis pour un nombre prescrit de cycles de bus et dans lequel le nombre prescrit de cycles de bus est suffisant pour l'écriture du pointeur (124) dans le registre d'entrée (126).

3. Procédé selon la revendication 1 ou 2, dans lequel la structure de commande (118) contient un champ de confirmation (122), avec les autres étapes suivantes :
- blocage du registre d'entrée (126) après l'écriture du pointeur (124) par l'utilisateur (100),
- écriture d'une confirmation dans le champ de confirmation (122) par l'utilisateur (100),
- déblocage du registre d'entrée (126) par l'utilisateur (100) après la confirmation.

4. Procédé selon l'une des revendications précédentes 1 à 3, avec les autres étapes suivantes :
- lecture du registre d'entrée (126) par la première application après l'écriture du pointeur (124),
- vérification par la première application pour savoir si le registre d'entrée (126) contient le pointeur (124),
- si ce n'est pas le cas : vérification pour savoir si une confirmation a été mémorisée dans le champ de confirmation (122).

5. Procédé selon l'une des revendications précédentes 1 à 4, dans lequel la structure de commande (118) contient des instructions exécutables et des données utiles.

6. Procédé selon l'une des revendications précédentes 1 à 5, dans lequel plusieurs structures de commande qui s'enchaînent sont écrites dans la mémoire par la première application et dans lequel le pointeur (124) pointe sur la zone d'adresse de la première structure de commande (118) de la chaîne.

7. Programme informatique pour une application (104, 106, 108, ...) d'un utilisateur (100) d'un réseau de données (102), dans lequel l'application peut accéder à un bus de données (110) pour plusieurs applications de l'utilisateur (100) et l'utilisateur (100) comporte un registre d'entrée (126) et un registre de sortie (136, 130) associé à l'application, avec des moyens formant programmes pour la mise en oeuvre des étapes suivantes :
- écriture d'une structure de commande (118) dans une zone d'adresse d'une mémoire de l'utilisateur (100) par l'intermédiaire du bus de données (110),
**caractérisé par** les autres étapes :
- écriture d'un pointeur (124) sur la zone d'adresse dans le registre d'entrée (126) d'une unité de commande (116) par l'intermédiaire du bus de données (110),
- lecture du registre d'entrée (126) pour vérifier que la structure de commande (118) a été confirmée par l'unité de commande (116) .

8. Programme informatique selon la revendication 7, dans lequel une vérification d'un champ de confirmation (122) dans la structure de commande (118) s'effectue lorsque, lors de la lecture du registre d'entrée (126), le pointeur (124) n'est plus dans le registre d'entrée (126).

9. Programme informatique selon la revendication 7 ou 8, dans lequel plusieurs structures de commande qui s'enchaînent sont écrites dans la mémoire de l'utilisateur (100) et dans lequel le pointeur (124) pointe sur la zone d'adresse de la première structure de commande (118) de la chaîne.

10. Programme informatique selon la revendication 7, 8 ou 9, dans lequel le registre de sortie (136, 130) associé à l'application est lu pour vérifier si la structure de commande (118) a été traitée par l'unité de commande (116).

11. Appareil utilisateur (100) d'un réseau de données (102), avec
- une unité de commande (116) pour l'accès au réseau de données (102),
- des moyens pour le fonctionnement de plusieurs applications (104, 106, 108, ...), les applications pouvant accéder à un bus de données (110) de l'utilisateur (100), et
- des moyens pour l'écriture d'au moins une structure de commande (118) dans une zone d'adresse d'une mémoire de l'utilisateur (100) par une première application par l'intermédiaire du bus de données (110),
**caractérisé par** :
- des moyens pour l'écriture d'un pointeur (124) sur la zone d'adresse dans le registre d'entrée (126) de l'unité de commande (116) par la première application par l'intermédiaire du bus de données (110),
- des moyens pour l'accès de l'unité de commande (116) à la zone d'adresse par l'intermédiaire du bus de données (110) et pour le traitement de la structure de commande (118), et
- des moyens pour l'écriture du pointeur (124) dans un registre de sortie (136, 130) associé à la première application après le traitement de la structure de commande (118) par l'utilisateur (100).

12. Appareil utilisateur (100) selon la revendication 11, avec une unité d'arbitrage (112) pour la régulation de l'accès au bus de données (110), un accès étant permis pour un nombre prescrit de cycles de bus et le nombre prescrit de cycles de bus étant suffisant pour l'écriture du pointeur (124) dans le registre d'entrée (126).

13. Appareil utilisateur (100) selon la revendication 11 ou 12, dans lequel un champ de confirmation (122) est contenu dans la structure de commande (118) et avec
- des moyens pour le blocage du registre d'entrée (126) après l'écriture du pointeur (124) par l'utilisateur (100) ,
- des moyens pour l'écriture d'une confirmation dans le champ de confirmation (122) par l'utilisateur (100),
- des moyens pour le déblocage du registre d'entrée (126) par l'utilisateur (100) après la confirmation.

14. Appareil utilisateur (100) selon la revendication 11, 12 ou 13, avec
- des moyens pour la lecture du registre d'entrée (126) par la première application après l'écriture du pointeur (124),
- des moyens pour la vérification par la première application pour savoir si le registre d'entrée (126) contient le pointeur (124) et, si ce n'est pas le cas, pour la vérification pour savoir si une confirmation a été mémorisée dans le champ de confirmation (122).

15. Appareil utilisateur (100) selon l'une des revendications précédentes 11 à 14, dans lequel la structure de commande (118) contient des instructions exécutables et des données utiles.

16. Appareil utilisateur (100) selon l'une des revendications précédentes 11 à 15, avec plusieurs structures de commande qui s'enchaînent dans la mémoire, le pointeur (124) pointant sur la zone d'adresse de la première structure de commande (118) de la chaîne.

17. Système de communication avec un réseau de données (102) et avec plusieurs appareils utilisateurs selon l'une des revendications précédentes 11 à 16.
